# EUROPEAN PATENT SPECIFICATION

(11) **EP 4 603 344 B1**
(45) Date of publication and mention of the grant of the patent: **30.09.2026**
(21) Application number: 23799016.3
(22) Date of filing: 09.10.2023
(51) Int. Cl.: B60T 7/04, B60T 7/08, B60T 8/17, B60T 8/173, B60T 8/26, B60T 8/32, B60T 13/66, B60T 13/68, B60T 17/22

(54) **HYDRAULIC PRESSURE CONTROL UNIT, BRAKE SYSTEM, AND DIAGNOSIS METHOD**
HYDRAULISCHE DRUCKSTEUEREINHEIT, BREMSSYSTEM UND DIAGNOSEVERFAHREN
UNITÉ DE COMMANDE DE PRESSION HYDRAULIQUE, SYSTÈME DE FREINAGE ET PROCÉDÉ DE DIAGNOSTIC

(30) Priority: 12.10.2022 JP 2022163659
(43) Date of publication of application: 20.08.2025
(73) Proprietor: Robert Bosch GmbH, 70442 Stuttgart (DE)
(72) Inventor: ISHII, Shohei, Yokohama-shi, Kanagawa 224-8501 (JP)
(74) Representative: Isarpatent
(86) International application number: PCT/IB2023/060115
(87) International publication number: WO 2024/079598

(56) References cited:
- WO-A1-2007/097190
- WO-A1-2022/149030
- JP-A- 2006 077 832
- JP-A- 2008 068 825
- JP-A- 2011 131 706
- JP-A- 2021 017 232
- JP-A- H08 156 772
- JP-B2- 5 033 443
- US-B1- 6 211 681

## Description

### Technical Field

The present disclosure relates to a hydraulic pressure control unit, a brake system, and a diagnosis method capable of appropriately diagnosing an abnormality of a power supply line.

### Background Art

A hydraulic pressure control unit for controlling a braking force to be generated in wheels is provided in a straddle-type vehicle (for example, see PTL 1). In the hydraulic pressure control unit, a hydraulic pressure control mechanism including an electromagnetic valve controls the hydraulic pressure of a brake fluid. In addition, PTL 2 describes a solenoid valve drive device that includes a field effect transistor connected in series to the coil of a solenoid valve that can be switched on/off and also allows half-open control with a current of an intermediate value between on and off, a free wheel diode connected in parallel to the coil, and current control means that controls the current-on state of the field effect transistor by duty-controlling the current-on/cut-off state of the field effect transistor during the half-open control. PTL 3 describes an abnormality diagnosis device for a vehicular braking device and an abnormality diagnosis method for a vehicular braking device capable of diagnosing whether or not a switching means is in the abnormal state by quickly discharging a charge remained in a capacitor without enlarging the device itself when application of a voltage to a solenoid of a solenoid valve is stopped. PTL 4 describes an apparatus for correctly monitoring at least one of a plurality of electric power sources connected to a load device, without an influence of the other power source or sources on the state of the subject electric power source or sources, and the apparatus may be utilized for an automotive vehicle that can be run on a road surface.

### Citation List

### Patent Literature

PTL 1: JP2018-8674A
PTL 2: JP 2006 077832 A
PTL 3: JP 2008 068825 A
PTL 4: US 6 211 681 B1

### Summary of Invention

### Technical Problem

A hydraulic pressure control unit is electrically connected to a power supply through a power supply line such as a wire harness. Each device such as the electromagnetic valve in the hydraulic pressure control unit operates using electric power that is supplied from the power supply through the power supply line. When an abnormality of the power supply line (for example, aged deterioration) is generated to make a resistance value of the power supply line excessively large, it becomes difficult to operate the hydraulic pressure control unit normally. Therefore, a power supply line diagnosis in which an abnormality of the power supply line is diagnosed is performed.

In the power supply line diagnosis, for example, an inlet valve to be provided in a flow path that communicates with a master cylinder and a wheel cylinder is opened and closed, and an abnormality of the power supply line is diagnosed based on a voltage change in the power supply line in that case. Therefore, in a case where a brake operation is performed by a rider during the execution of the power supply line diagnosis, it can be difficult to brake the straddle-type vehicle with the intention of the rider. Therefore, it is desired to appropriately diagnose an abnormality of the power supply line by suppressing such a situation.

The present invention is made in view of the abovementioned problems, and obtains a hydraulic pressure control unit, a brake system, and a diagnosis method capable of appropriately diagnosing an abnormality of a power supply line.

### Solution to Problem

A hydraulic pressure control unit according to the invention is a hydraulic pressure control unit that is used in a brake system of a straddle-type vehicle, the hydraulic pressure control unit includes: a hydraulic pressure control mechanism including an inlet valve as an electromagnetic valve that is electrically connected to a power supply through a power supply line, is provided to a flow path that communicates with a master cylinder and a wheel cylinder, and becomes an open state in no-energization and becomes a closed state in energization; and a control device that controls an operation of the hydraulic pressure control mechanism, and further includes a resistance that is electrically connected to the power supply through the power supply line, in which the control device includes a diagnosis unit that performs a power supply line diagnosis in which an abnormality of the power supply line is diagnosed, in a state where no current is applied to the inlet valve but a current is applied to the resistance, based on a voltage change in the power supply line when the current to be applied to the resistance is changed.

A brake system according to the invention includes the abovementioned hydraulic pressure control unit, in which the number of the wheel cylinders that communicate with the one master cylinder is one.

A diagnosis method according to the invention is a diagnosis method of a hydraulic pressure control unit that is used in a brake system of a straddle-type vehicle, the hydraulic pressure control unit including: a hydraulic pressure control mechanism including an inlet valve as an electromagnetic valve that is electrically connected to a power supply through a power supply line, is provided to a flow path that communicates with a master cylinder and a wheel cylinder, and becomes an open state in no-energization and becomes a closed state in energization; and a control device that controls an operation of the hydraulic pressure control mechanism, and further including a resistance that is electrically connected to the power supply through the power supply line, the diagnosis method including performing, by a diagnosis unit of the control device, a power supply line diagnosis in which an abnormality of the power supply line is diagnosed, in a state where no current is applied to the inlet valve but a current is applied to the resistance, based on a voltage change in the power supply line when the current to be applied to the resistance is changed.

### Advantageous Effects of Invention

In a hydraulic pressure control unit, a brake system, and a diagnosis method according to the invention, the hydraulic pressure control unit includes: a hydraulic pressure control mechanism including an inlet valve as an electromagnetic valve that is electrically connected to a power supply through a power supply line, is provided to a flow path that communicates with a master cylinder and a wheel cylinder, and becomes an open state in no-energization and becomes a closed state in energization; and a control device that controls an operation of the hydraulic pressure control mechanism, and further includes a resistance that is electrically connected to the power supply through the power supply line, in which a diagnosis unit of the control device performs a power supply line diagnosis in which an abnormality of the power supply line is diagnosed, in a state where no current is applied to the inlet valve but a current is applied to the resistance, based on a voltage change in the power supply line when the current to be applied to the resistance is changed. Accordingly, it is possible to perform the power supply line diagnosis without opening and closing the inlet valve. Therefore, when a brake operation is performed by a rider during the execution of the power supply line diagnosis, the difficultly of braking the straddle-type vehicle with the intention of the rider is reduced. Therefore, it is possible to appropriately diagnose the abnormality of the power supply line.

### Brief Description of Drawings

Fig. 1 is a schematic diagram illustrating a schematic configuration of a straddle-type vehicle according to an embodiment of the present invention.
Fig. 2 is a schematic diagram illustrating a schematic configuration of a brake system according to the embodiment of the invention.
Fig. 3 is a diagram illustrating one example of an electric connection relation among components including a hydraulic pressure control unit according to the embodiment of the invention.
Fig. 4 is a block diagram illustrating one example of a function configuration of a control device according to the embodiment of the invention.
Fig. 5 is a flowchart illustrating one example of a flow of processing related to a power supply line diagnosis that is performed by the control device according to the embodiment of the invention.
Fig. 6 is a diagram for describing a flow of a current during the execution of the power supply line diagnosis according to the embodiment of the invention.
Fig. 7 is a diagram for describing a flow of a current in energization to an inlet valve in anti-lock brake control according to the embodiment of the invention.

### Description of Embodiments

Hereinafter, a hydraulic pressure control unit, a brake system, and a diagnosis method according to the present invention will be described with reference to the drawings.

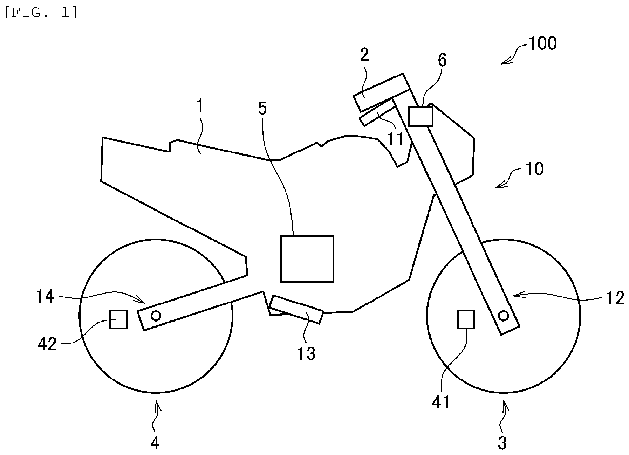

Note that, hereinafter, although a hydraulic pressure control unit that is used in a two-wheeled motorcycle is described (see a straddle-type vehicle 100 in Fig. 1), a vehicle to which the hydraulic pressure control unit according to the invention is applied may be other straddle-type vehicles than the two-wheeled motorcycle. The straddle-type vehicle indicates a vehicle on which a rider straddles and rides. The straddle-type vehicle includes, for example, motorcycles (a two-wheeled motor vehicle and a three-wheeled motor vehicle), and a bicycle. The motorcycle includes a vehicle that uses an engine as a power source, a vehicle that uses an electric motor as a power source, and the like. The motorcycle includes, for example, a motorbike, a scooter, and an electric scooter. The bicycle indicates a vehicle capable of traveling on a road by a pedal force of a rider that is applied to pedals. The bicycle includes a usual bicycle, an electric assist bicycle, an electric bicycle, and the like.

Moreover, the configuration, the operation, and the like to be described hereinafter are examples, and a hydraulic pressure control unit, a brake system, and a diagnosis method according to the invention are not limited to those having such the configuration, the operation, and the like.

Moreover, hereinafter, the same or similar descriptions are simplified or omitted as appropriate. Moreover, in the respective drawings, as for the same or similar members or portions, assigning reference numerals thereto is omitted, or the same reference numerals are assigned thereto. Moreover, detailed structures are simplified or omitted as appropriate.

### <Configuration of Straddle-Type Vehicle>

With reference to Figs. 1 to 4, a configuration of the straddle-type vehicle 100 according to an embodiment of the invention will be described.

Fig. 1 is a schematic diagram illustrating a schematic configuration of the straddle-type vehicle 100. The straddle-type vehicle 100 is a two-wheeled motorcycle corresponding to one example of a straddle-type vehicle according to the invention. As illustrated in Fig. 1, the straddle-type vehicle 100 is provided with a body 1, a handle 2, a front wheel 3, a rear wheel 4, a hydraulic pressure control unit 5, and a notification device 6. Moreover, the straddle-type vehicle 100 is provided with a brake system 10. The brake system 10 includes a first brake operation unit 11, a front-wheel braking mechanism 12, a second brake operation unit 13, and a rear-wheel braking mechanism 14.

The handle 2 is held by the body 1 so as to freely turn. The front wheel 3 is held by the body 1 so as to freely turn, together with the handle 2. The rear wheel 4 is held by the body 1 so as to freely rotate. The hydraulic pressure control unit 5 controls a braking force to be generated in the wheels of the straddle-type vehicle 100. The hydraulic pressure control unit 5 is included in the brake system 10. Details of the hydraulic pressure control unit 5 will be described later. The notification device 6 makes notification of various kinds of information. As the notification device 6, for example, a display device such as a lamp or a sound output device is used.

The brake system 10 is specifically provided with the hydraulic pressure control unit 5, in addition to the first brake operation unit 11, the front-wheel braking mechanism 12, the second brake operation unit 13, and the rear-wheel braking mechanism 14. The first brake operation unit 11 is provided to the handle 2, for example, and is operated by a hand of a rider. The first brake operation unit 11 is a brake lever, for example. The front-wheel braking mechanism 12 moves in conjunction with at least the first brake operation unit 11 to brake the front wheel 3. The second brake operation unit 13 is provided to a lower part of the body 1, for example, and is operated by a foot of the rider. The second brake operation unit 13 is a brake pedal, for example. The rear-wheel braking mechanism 14 moves in conjunction with at least the second brake operation unit 13 to brake the rear wheel 4. The hydraulic pressure control unit 5 is a unit having a function of controlling a braking force that is applied to the front wheel 3 by the front-wheel braking mechanism 12, and a braking force that is applied to the rear wheel 4 by the rear-wheel braking mechanism 14.

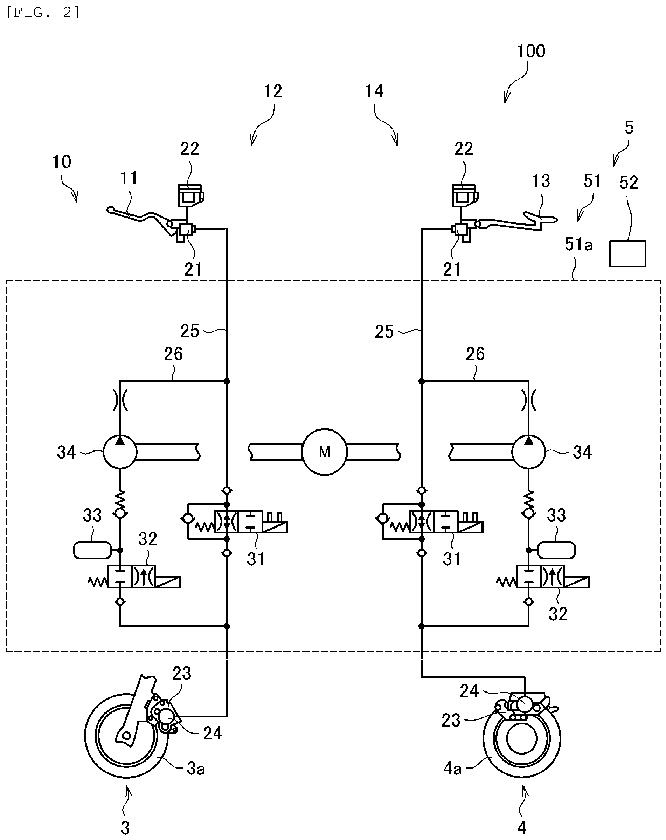

Fig. 2 is a schematic diagram illustrating a schematic configuration of the brake system 10. As illustrated in Fig. 2, each of the front-wheel braking mechanism 12 and the rear-wheel braking mechanism 14 is provided with a master cylinder 21 in which a piston (illustration is omitted) is incorporated, a reservoir 22 that is attached to the master cylinder 21, a brake caliper 23 that is held by the body 1, and includes a brake pad (illustration is omitted), a wheel cylinder 24 that is provided to the brake caliper 23, a main flow path 25 through which a brake fluid of the master cylinder 21 circulates to the wheel cylinder 24, and an auxiliary flow path 26 that lets a brake fluid of the wheel cylinder 24 escape. As illustrated in Fig. 2, in the brake system 10, the number of the wheel cylinders 24 that communicate with one master cylinder 21 is one.

Further, the number of the wheel cylinders 24 that communicate with one master cylinder 21 may be two or more. Moreover, a supply flow path through which the brake fluid of the master cylinder 21 is supplied to the auxiliary flow path 26 may be further provided. Moreover, one of the front-wheel braking mechanism 12 and the rear-wheel braking mechanism 14 may be omitted.

The main flow path 25 is a flow path that communicates with the master cylinder 21 and the wheel cylinder 24. An inlet valve (EV) 31 is provided to the main flow path 25. The auxiliary flow path 26 bypasses the inlet valve 31 in the main flow path 25 between the wheel cylinder 24 side and he master cylinder 21 side. An outlet valve (AV) 32, an accumulator 33, and a pump 34 sequentially from the upstream side are provided to the auxiliary flow path 26.

The inlet valve 31 and the outlet valve 32 are electromagnetic valves that control a hydraulic pressure to be caused to generate in the wheel cylinder 24. The inlet valve 31 is an electromagnetic valve that becomes an open state in the no-energization, and becomes a closed state in the energization. The inlet valve 31 becomes the closed state due to the energization. Specifically, when the current to be applied to the inlet valve 31 increases to some extent, the inlet valve 31 becomes the closed state. The outlet valve 32 is an electromagnetic valve that becomes the closed state in the no-energization, and becomes the open state in the energization. The outlet valve 32 becomes the open state due to the energization. Specifically, when the current to be applied to the outlet valve 32 increases to some extent, the outlet valve 32 becomes the open state.

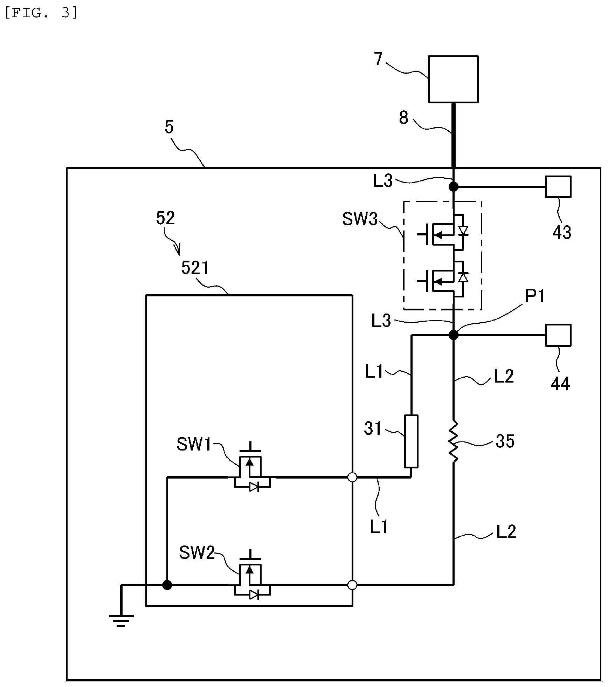

The hydraulic pressure control unit 5 is provided with a hydraulic pressure control mechanism 51 for controlling a hydraulic pressure of the brake fluid, and a control device 52 that controls an operation of the hydraulic pressure control mechanism 51. The hydraulic pressure control mechanism 51 includes the components including the inlet valve 31, the outlet valve 32, the accumulator 33, the pump 34, and the like mentioned above. The hydraulic pressure control mechanism 51 includes a base 51a in which the flow paths including the main flow path 25, the auxiliary flow path 26, and the like mentioned above are formed, and the abovementioned components are provided to the base 51a. The control device 52 includes, as is described later, for example, a microcomputer and integrated circuit (see an integrated circuit 521, which is described later, in Fig. 3) .

Note that, the base 51a may be formed of one member, or may be formed of a plurality of members. Moreover, in a case where the base 51a is formed of a plurality of members, the respective components may be separately provided to the different members.

The operation of the hydraulic pressure control mechanism 51 is controlled by the control device 52 to control a braking force to be generated in the front wheel 3 by the front-wheel braking mechanism 12, and a braking force to be generated in the rear wheel 4 by the rear-wheel braking mechanism 14. The control device 52 controls the operation of the hydraulic pressure control mechanism 51 in accordance with a traveling state of the straddle-type vehicle 100, for example.

For example, in a normal state (in other words, a state where anti-lock brake control, which is described later, and the like are not executed), the inlet valve 31 is opened and the outlet valve 32 is closed by the control device 52. In the state, when the first brake operation unit 11 is operated, in the front-wheel braking mechanism 12, the piston (illustration is omitted) of the master cylinder 21 is pushed down to increase the hydraulic pressure of the brake fluid in the wheel cylinder 24, and press the brake pad (illustration is omitted) of the brake caliper 23 against a rotor 3a of the front wheel 3, thereby applying a braking force to the front wheel 3. Moreover, when the second brake operation unit 13 is operated, in the rear-wheel braking mechanism 14, the piston (illustration is omitted) of the master cylinder 21 is pushed down to increase the hydraulic pressure of the brake fluid in the wheel cylinder 24, and press the brake pad (illustration is omitted) of the brake caliper 23 against a rotor 4a of the rear wheel 4, thereby applying a braking force to the rear wheel 4.

The anti-lock brake control is control that is executed when a lock or a possibility of a lock has been generated in a wheel (specifically, the front wheel 3 or the rear wheel 4), for example, and decreases a braking force to be applied to the wheel, without the operation of the brake operation unit by the rider. For example, in a state where the anti-lock brake control is executed, the inlet valve 31 is closed and the outlet valve 32 is opened by the control device 52. In the state, the pump 34 is driven by the control device 52 to decrease the hydraulic pressure of the brake fluid in the wheel cylinder 24, and decrease the braking force to be applied to the wheel. Note that, specifically, the pump 34 is driven by a motor that drives the pump 34. Therefore, the control device 52 can drive the pump 34 by driving the motor.

The control device 52 executes various kinds of control using various kinds of information that is detected in the straddle-type vehicle 100. For example, as illustrated in Fig. 1, the straddle-type vehicle 100 is provided with a front-wheel wheel speed sensor 41 and a rear-wheel wheel speed sensor 42. Detection results by these sensors are output to the control device 52.

The front-wheel wheel speed sensor 41 is a wheel speed sensor that detects a wheel speed of the front wheel 3 (for example, a rotational frequency [rpm] per unit time or a movement distance [km/h] per unit time, or the like of the front wheel 3), and outputs a detection result. The front-wheel wheel speed sensor 41 may detect another physical amount that can be substantially converted into the wheel speed of the front wheel 3. The front-wheel wheel speed sensor 41 is provided to the front wheel 3.

The rear-wheel wheel speed sensor 42 is a wheel speed sensor that detects a wheel speed of the rear wheel 4 (for example, a rotational frequency [rpm] per unit time or a movement distance [km/h] per unit time, or the like of the rear wheel 4), and outputs a detection result. The rear-wheel wheel speed sensor 42 may detect another physical amount that can be substantially converted into the wheel speed of the rear wheel 4. The rear-wheel wheel speed sensor 42 is provided to the rear wheel 4.

Fig. 3 is a diagram illustrating one example of an electric connection relation among components including the hydraulic pressure control unit 5. As illustrated in Fig. 3, the hydraulic pressure control unit 5 is electrically connected to a power supply 7 through a power supply line 8 such as a wire harness. Each device in the hydraulic pressure control unit 5 operates using electric power that is supplied from the power supply 7 through the power supply line 8. Fig. 3 only extracts and illustrates the inlet valve 31, which is one of the components that operate using the electric power to be supplied from the power supply 7 in the hydraulic pressure control unit 5, and related portions. The inlet valve 31 is electrically connected to the power supply 7 through the power supply line 8.

Note that, in Fig. 3, for easy understanding, one inlet valve 31 is illustrated, however, in a case where the configuration of the brake system 10 is the configuration in Fig. 2, actually, two inlet valves 31 (in other words, the inlet valve 31 of the front-wheel braking mechanism 12 and the inlet valve 31 of the rear-wheel braking mechanism 14) are electrically connected to the power supply 7 through the power supply line 8. Further, a first switching element SW1, which is described later, is provided to each of the inlet valves 31. Moreover, other components (for example, the outlet valve 32) other than the inlet valve 31 in the hydraulic pressure control unit 5 are electrically connected to the power supply 7 through the power supply line 8 as well.

As illustrated in Fig. 3, the hydraulic pressure control unit 5 is provided with, a resistance 35, a voltage sensor 43, a voltage sensor 44, the integrated circuit 521, the first switching element SW1, a second switching element SW2, and a third switching element SW3. The integrated circuit 521 is included in the control device 52, and plays a part of the function that the control device 52 has (for example, a function of controlling the opening and closing operations of the inlet valve 31 and the like).

The inlet valve 31 is provided to a first line L1. The resistance 35 is provided to a second line L2. The first line L1 and the second line L2 are electrically connected to each other in parallel. Therefore, not only the inlet valve 31, but also the resistance 35 is electrically connected to the power supply 7 through the power supply line 8. The resistance 35 has, for example, a resistance value equivalent to an internal resistance value of the inlet valve 31. Further, the resistance value of the resistance 35 may be smaller or larger than the internal resistance value of the inlet valve 31.

Hereinafter, an upstream side of a flow of a current flowing from the power supply 7 toward the inlet valve 31 or the resistance 35 is simply called an upstream side, and a downstream side thereof is simply called a downstream side.

A downstream end of the first line L1 and a downstream end of the second line L2 are both electrically connected to the integrated circuit 521. An upstream side of the first line L1 and an upstream side of the second line L2 merge at a merging portion P1. A downstream end of a third line L3 is connected to the merging portion P1. An upstream end of the third line L3 is electrically connected to the power supply line 8. In other words, the third line L3 electrically connects the merging portion P1 to the power supply line 8.

The first switching element SW1, the second switching element SW2, and the third switching element SW3 correspond to examples of a switching unit that switches the path of the current in the hydraulic pressure control unit 5. Each of the switching elements of the first switching element SW1, the second switching element SW2, and the third switching element SW3 switches propriety of the energization at an installation position. A case where each switching element is in the closed state results in a state where the current is able to pass through each switching element. On the other hand, a case where each switching element is in the open state results in a state where the current is unable to pass through each switching element. Each switching element includes, for example, a semiconductor relay including a field effect transistor (FET).

In the example in Fig. 3, each of the first switching element SW1 and the second switching element SW2 includes one semiconductor relay. Moreover, the third switching element SW3 includes two semiconductor relays connected in series, and the opening and closing operations of the two semiconductor relays are synchronized. Further, the configuration of each switching element is not specially limited. For example, the number of semiconductor relays to be provided to the third switching element SW3 may be one. Moreover, for example, a relay to be included in each switching element does not need to be a semiconductor relay, but may be a mechanical relay, for example.

The first switching element SW1 and the second switching element SW2 are incorporated in the integrated circuit 521. The first switching element SW1 is electrically connected to the downstream end of the first line L1. The second switching element SW2 is electrically connected to the downstream end of the second line L2. A downstream side of the first switching element SW1 and a downstream side of the second switching element SW2 are connected to the ground. The third switching element SW3 is provided to the third line L3.

The voltage sensors 43 and 44 detect the voltage at the installation positions. For example, the voltage sensors 43 and 44 are AD converters. The voltage sensor 43 is provided at the power supply line 8 side relative to the third switching element SW3 in the third line L3. Therefore, the voltage sensor 43 detects the voltage at the power supply line 8 side relative to the third switching element SW3 in the third line L3. The voltage sensor 44 is provided at the merging portion P1 side relative to the third switching element SW3 in the third line L3. Therefore, the voltage sensor 44 detects the voltage at the merging portion P1 side relative to the third switching element SW3 in the third line L3.

The voltage to be detected by the voltage sensors 43 and 44 corresponds to the voltage of the power supply line 8. Specifically, the voltage to be detected by the voltage sensors 43 and 44 is the voltage (in other words, the voltage at an end portion of the power supply line 8 at the hydraulic pressure control unit 5 side) obtained by subtracting the amount of voltage drop due to a resistance value of the power supply line 8 from the voltage of the power supply 7. Accordingly, as the resistance value of the power supply line 8 becomes large, the voltage obtained by subtracting the amount of voltage drop decreases.

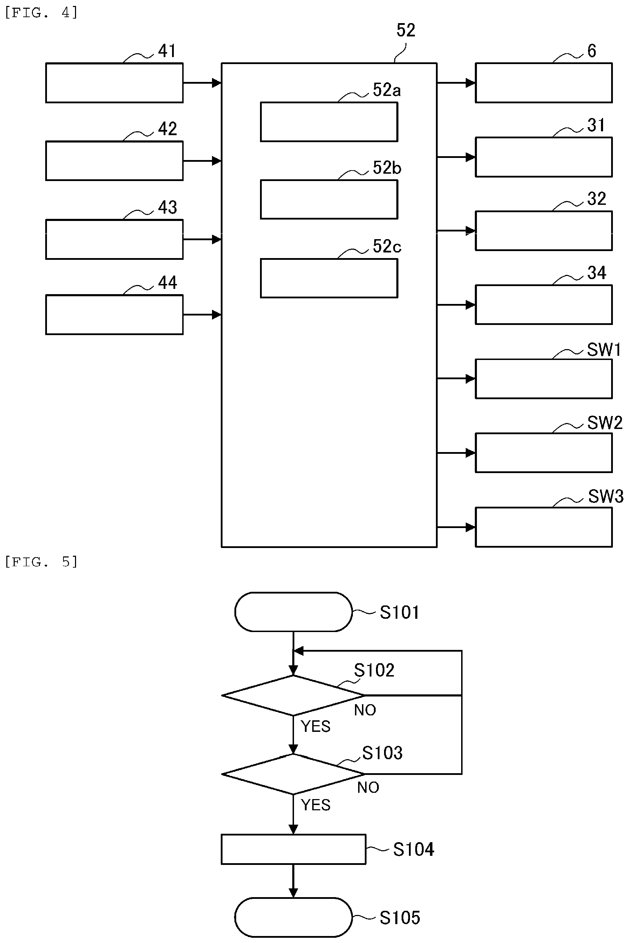

Fig. 4 is a block diagram illustrating one example of a function configuration of the control device 52. For example, a part or all of the control device 52 includes a microcomputer, a microprocessor unit, and the like. Note that, as mentioned above, the control device 52 can also include the integrated circuit 521. Moreover, for example, a part or all of the control device 52 may include an updatable component such as firmware, and may be a program module or the like that is executed by a command from a CPU or the like. The control device 52 may be one control device 52 or may be divided into a plurality of the control devices 52, for example.

As illustrated in Fig. 4, the control device 52 is provided with an acquisition unit 52a, a control unit 52b, and a diagnosis unit 52c, for example.

The acquisition unit 52a acquires information from the respective devices that are mounted to the straddle-type vehicle 100. For example, the acquisition unit 52a acquires information from the front-wheel wheel speed sensor 41, the rear-wheel wheel speed sensor 42, the voltage sensor 43, and the voltage sensor 44. Note that, in the present description, the acquisition of information can include extraction, creation, and the like of the information.

The control unit 52b controls operations of the various kinds of devices in the straddle-type vehicle 100. For example, the control unit 52b performs a notification operation with respect to a rider by controlling the operation of the notification device 6. Moreover, for example, the control unit 52b controls a braking force to be generated in the wheel of the straddle-type vehicle 100 by controlling the operation of the respective components (specifically, the inlet valve 31, the outlet valve 32, and the motor that drives the pump 34) of the hydraulic pressure control unit 5.

The diagnosis unit 52c performs a power supply line diagnosis in which an abnormality of the power supply line 8 is diagnosed. As mentioned above, when an abnormality of the power supply line 8 is generated to make the resistance value of the power supply line 8 excessive large, it becomes difficult to operate the hydraulic pressure control unit 5 normally. In the present embodiment, as is described later, a device is applied to the power supply line diagnosis, so that appropriately diagnosing the abnormality of the power supply line 8 is implemented.

Moreover, in the power supply line diagnosis, the diagnosis unit 52c can switch the path of the current in the hydraulic pressure control unit 5 by controlling the opening and closing operations of the first switching element SW1, the second switching element SW2, and the third switching element SW3.

### <Operation of Hydraulic Pressure Control Unit>

With reference to Figs. 5 to 7, an operation of the hydraulic pressure control unit 5 according to the embodiment of the invention will be described.

Fig. 5 is a flowchart illustrating one example of a flow related to a power supply line diagnosis that is performed by the control device 52 (specifically, the diagnosis unit 52c). Step S101 in Fig. 5 corresponds to a start of a control flow illustrated in Fig. 5. Step S105 in Fig. 5 corresponds to an end of the control flow illustrated in Fig. 5.

When the control flow illustrated in Fig. 5 is started, at Step S102, the diagnosis unit 52c determines whether a start condition of the power supply line diagnosis is satisfied. As the start condition of the power supply line diagnosis, for example, a condition is used in which after the straddle-type vehicle 100 has started, the vehicle speed of the straddle-type vehicle 100 has exceeded a reference vehicle speed. The vehicle speed of the straddle-type vehicle 100 can be acquired based on detection results by the front-wheel wheel speed sensor 41 and the rear-wheel wheel speed sensor 42, for example. The reference vehicle speed is set to the vehicle speed to the extent enabling determination that the rider has an intention of accelerating the straddle-type vehicle 100, for example.

If it has been determined that the start condition of the power supply line diagnosis is not satisfied (Step S102/NO), Step S102 is repeated. On the other hand, if it has been determined that the start condition of the power supply line diagnosis has been satisfied (Step S102/YES), the processing proceeds to Step S103.

At Step S103, the diagnosis unit 52c determines whether the voltage at the power supply line 8 side relative to the third switching element SW3 in the third line L3 is stable. As mentioned above, the abovementioned voltage corresponds to the voltage of the power supply line 8. Therefore, the determination at Step S103 corresponds to the determination whether the voltage of the power supply line 8 is stable.

The voltage at the power supply line 8 side relative to the third switching element SW3 in the third line L3 can be acquired based on a detection result by the voltage sensor 43, for example. For example, the diagnosis unit 52c acquires the abovementioned voltage over the set time, and determines that the abovementioned voltage is stable if a difference between a minimum value and a maximum value of the abovementioned voltage within the set time is equal to or less than a reference value. On the other hand, the diagnosis unit 52c determines that the abovementioned voltage is not stable if the difference between the minimum value and the maximum value of the abovementioned voltage within the set time is larger than the reference value.

If it has been determined that the voltage at the power supply line 8 side relative to the third switching element SW3 in the third line L3 is not stable (Step S103/NO), the processing returns to Step S102. On the other hand, if it has been determined that the voltage at the power supply line 8 side relative to the third switching element SW3 in the third line L3 is stable (Step S103/YES), the processing proceeds to Step S104.

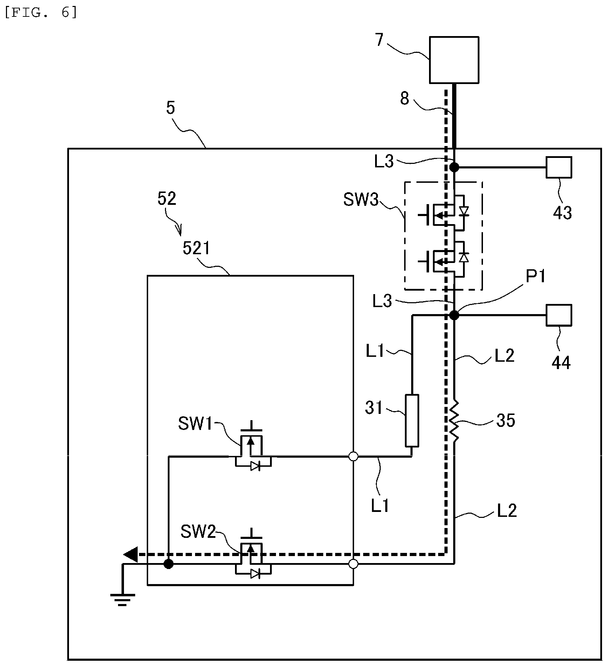

At Step S104, the diagnosis unit 52c performs the power supply line diagnosis to end the control flow illustrated in Fig. 5. Here, in the power supply line diagnosis, the diagnosis unit 52c diagnoses the abnormality of the power supply line 8, in a state where no current is applied to the inlet valve 31 but a current is applied to the resistance 35, based on a voltage change in the power supply line 8 when the current to be applied to the resistance 35 is changed. Hereinafter, details of the power supply line diagnosis will be described with reference to Fig. 6.

Fig. 6 is a diagram for describing a flow of current during the execution of the power supply line diagnosis. In Fig. 6, the flow of the current is indicated by a dashed line arrow. Firstly, the diagnosis unit 52c switches the path of the current in the hydraulic pressure control unit 5 such that no current is applied to the inlet valve 31 but a current is applied to the resistance 35, in the power supply line diagnosis. Specifically, the diagnosis unit 52c controls an opening and closing state of each switching element such that the first switching element SW1 becomes the open state, the second switching element SW2 becomes the closed state, and the third switching element SW3 becomes the closed state. Accordingly, the path of the current in the hydraulic pressure control unit 5 is switched such that no current flows in the first line L1 but the current flows in the second line L2. Therefore, as illustrated in Fig. 6, no current is applied to the inlet valve 31 but a current is applied to the resistance 35.

Next, the diagnosis unit 52c changes a current (specifically, current value) to be applied to the resistance 35. For example, the diagnosis unit 52c can change the current to be applied to the resistance 35 by switching the second switching element SW2 between the open state and the closed state, and changing the duration time of the open state per unit time. Further, the diagnosis unit 52c diagnoses the abnormality of the power supply line 8 based on the voltage change that is a change in the voltage of the power supply line 8 in that case. For example, the diagnosis unit 52c acquires the voltage of the power supply line 8, based on the voltage at the merging portion P1 side relative to the third switching element SW3 in the third line L3. The voltage at the merging portion P1 side relative to the third switching element SW3 in the third line L3 can be acquired, for example, based on a detection result by the voltage sensor 44.

For example, the diagnosis unit 52c sequentially applies a pulse current having a plurality of rectangular waves to the resistance 35, in the power supply line diagnosis. In a case where no pulse current is applied to the resistance 35, a voltage drop due to the resistance value of the power supply line 8 does not occur. Therefore, the voltage of the power supply line 8 that is detected by the voltage sensor 44 becomes approximately equivalent to the voltage of the power supply 7. On the other hand, in a case where the pulse current is applied to the resistance 35, a voltage drop due to the resistance value of the power supply line 8 occurs. Therefore, the voltage of the power supply line 8 that is detected by the voltage sensor 44 becomes lower than that in the case where no pulse current is applied to the resistance 35.

The diagnosis unit 52c performs the power supply line diagnosis, based on a changing amount in the voltage of the power supply line 8 before and after a state where no pulse current is applied to the resistance 35 and a state where a pulse current is applied to the resistance 35 are switched. For example, the diagnosis unit 52c evaluates the resistance value being normal in a case where the abovementioned voltage changing amount is smaller than the reference changing amount (in other words, a value in which the reference resistance value is replaced with the voltage changing amount). On the other hand, the diagnosis unit 52c evaluates the resistance value being abnormal in a case where the abovementioned voltage changing amount is larger than reference changing amount. For example, the diagnosis unit 52c performs such the evaluation a plurality of times, and diagnoses whether the power supply line 8 is normal based on the evaluation results. In a case where it has been diagnosed that the power supply line 8 is abnormal, for example, the notification device 6 notifies the rider of the power supply line 8 being abnormal.

As has been described above, in the power supply line diagnosis, the diagnosis unit 52c diagnoses the abnormality of the power supply line 8, in a state where no current is applied to the inlet valve 31 but a current is applied to the resistance 35, based on a voltage change of the power supply line 8 when the current to be applied to the resistance 35 is changed. Accordingly, it is possible to perform the power supply line diagnosis without opening and closing the inlet valve 31. Therefore, even in a case where a brake operation is performed by a rider during the execution of the power supply line diagnosis, it is possible to brake the straddle-type vehicle 100 with the intention of the rider. Therefore, it is possible to appropriately diagnose the abnormality of the power supply line 8.

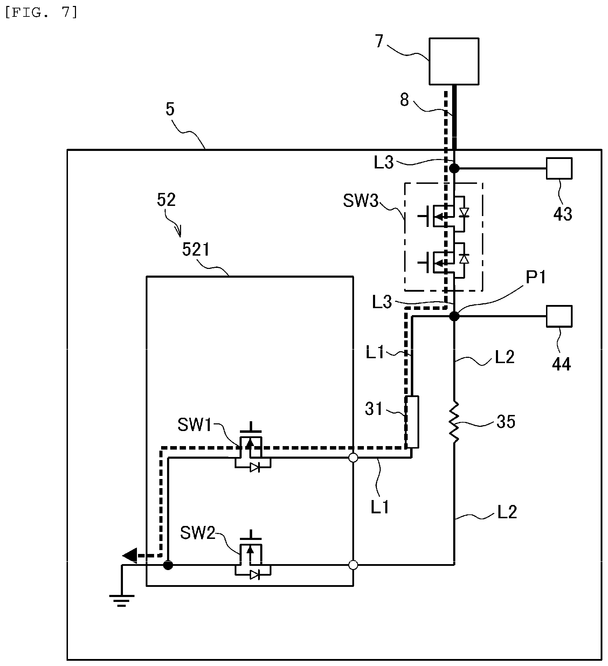

Fig. 7 is a diagram for describing a flow of a current in the energization to the inlet valve 31 in anti-lock brake control. In Fig. 7, the flow of the current is indicated by a dashed line arrow. As mentioned above, in the anti-lock brake control, the energization to the inlet valve 31 is performed. At this time, the control device 52 controls an opening and closing state of each switching element such that the first switching element SW1 becomes the closed state, the second switching element SW2 becomes the open state, and the third switching element SW3 becomes the closed state. Accordingly, the path of the current in the hydraulic pressure control unit 5 is switched such that no current flows in the second line L2 but the current flows in the first line L1. Therefore, as illustrated in Fig. 7, no current is applied to the resistance 35 but the current is applied to the inlet valve 31.

As mentioned above, in a case where no power supply line diagnosis is performed, the second switching element SW2 becomes the open state to result in a state where no current is applied to the resistance 35. Therefore, in the energization to the inlet valve 31 and other cases in the anti-lock brake control, it is possible to prevent the current from unnecessarily applying to the resistance 35.

### <Effects of Hydraulic Pressure Control Unit>

Effects of the hydraulic pressure control unit 5 according to the embodiment of the invention will be described.

In the hydraulic pressure control unit 5, in the power supply line diagnosis, the diagnosis unit 52c diagnoses the abnormality of the power supply line 8, in a state where no current is applied to the inlet valve 31 but a current is applied to the resistance 35, based on a voltage change in the power supply line 8 when the current to be applied to the resistance 35 is changed. Accordingly, the power supply line diagnosis can be performed without opening and closing the inlet valve 31. Therefore, even in a case where a brake operation is performed by a rider during the execution of the power supply line diagnosis, it is possible to brake the straddle-type vehicle 100 with the intention of the rider. Therefore, it is possible to appropriately diagnose the abnormality of the power supply line 8.

Preferably, the hydraulic pressure control unit 5 includes: the first line L1 to which the inlet valve 31 is provided and the second line L2 to which the resistance 35 is provided, which are electrically connected to each other in parallel; and a switching unit (in the abovementioned example, the first switching element SW1, the second switching element SW2, and the third switching element SW3) that switches a path of the current in the hydraulic pressure control unit 5, in which the diagnosis unit 52c switches the path such that no current flows in the first line L1 but the current flows in the second line L2, by the switching unit, in the power supply line diagnosis. Accordingly, in the power supply line diagnosis, it is possible to appropriately implement a state where no current is applied to the inlet valve 31 but the current is applied to the resistance 35. Therefore, performing the power supply line diagnosis is appropriately implemented without opening and closing the inlet valve 31.

Preferably, in the hydraulic pressure control unit 5, the control device 52 includes the integrated circuit 521, the downstream end of the first line L1 and the downstream end of the second line L2 are both connected to the integrated circuit 521, and the switching unit includes the first switching element SW1 that is electrically connected to the downstream end of the first line L1 and incorporated in the integrated circuit 521, and the second switching element SW2 that is electrically connected to the downstream end of the second line L2 and incorporated in the integrated circuit 521. Accordingly, one of the first switching element SW1 and the second switching element SW2 is made to the open state and the other is made to the closed state, so that it is possible to switch between a state where no current is applied to the inlet valve 31 but a current can be applied to the resistance 35, and a state where no current is applied to the resistance 35 but a current can be applied to the inlet valve 31. Therefore, in the power supply line diagnosis, it is possible to implement a state where no current is applied to the inlet valve 31 but a current is applied to the resistance 35, more appropriately.

Preferably, the hydraulic pressure control unit 5 includes the third line L3 that electrically connects the merging portion P1 of an upstream side of the first line L1 and an upstream side of the second line L2, to the power supply line 8, in which the switching unit includes the third switching element SW3 that is provided to the third line L3. Accordingly, the third switching element SW3 is opened and closed, so that it is possible to switch between a state where a current is applied to the inlet valve 31 or the resistance 35 and a state where no current is applied thereto. Therefore, in the power supply line diagnosis, it is possible to implement a state where no current is applied to the inlet valve 31 but a current is applied to the resistance 35, more appropriately.

In the foregoing, the example in which as the switching unit, the first switching element SW1, the second switching element SW2, and the third switching element SW3 are provided has been described with reference to Fig. 3 and the like. However, the configuration of the switching unit is not limited to the abovementioned example. For example, the number and the arrangement of the switching elements for switching between a state where no current is applied to the inlet valve 31 but a current can be applied to the resistance 35, and a state where no current is applied to the resistance 35 but a current can be applied to the inlet valve 31 may be different from those in the abovementioned example. Moreover, for example, the number and the arrangement of the switching elements for switching between a state where a current is applied to the inlet valve 31 or the resistance 35 and a state where no current is applied thereto may be different from those in the abovementioned example.

Preferably, in the hydraulic pressure control unit 5, the diagnosis unit 52c performs the power supply line diagnosis when it is determined that a voltage at the power supply line 8 side relative to the third switching element SW3 in the third line L3 is stable. Here, the voltage at the power supply line 8 side relative to the third switching element SW3 in the third line L3 indicates a value corresponding to the voltage of the power supply line 8 even in a case where the third switching element SW3 is in the open state. Therefore, by performing the power supply line diagnosis in the abovementioned case, it is possible to perform the power supply line diagnosis after the voltage of the power supply line 8 being stable has been checked. Therefore, it is possible to improve the diagnosis accuracy of the power supply line diagnosis.

In the foregoing, the example in which the power supply line diagnosis is performed when it is determined that the voltage at the power supply line 8 side relative to the third switching element SW3 in the third line L3 is stable has been described. However, the power supply line diagnosis may be performed without performing the determination whether the voltage at the power supply line 8 side relative to the third switching element SW3 is stable.

Preferably, in the hydraulic pressure control unit 5, the diagnosis unit 52c performs the power supply line diagnosis in the closed state of the third switching element SW3, and acquires the voltage of the power supply line 8, based on the voltage at the merging portion P1 side relative to the third switching element SW3 in the third line L3, in the power supply line diagnosis. Here, an abnormality (for example, break) of the third switching element SW3 is reflected to the voltage at the merging portion P1 side relative to the third switching element SW3 in the third line L3. Therefore, in the power supply line diagnosis, by acquiring the voltage of the power supply line 8 based on the voltage at the merging portion P1 side relative to the third switching element SW3 in the third line L3, it is possible to diagnose not only the presence or absence of an abnormality of the power supply line 8, but also an abnormality of the third line L3 (for example, an abnormality of the third switching element SW3).

In the foregoing, the example in which in the power supply line diagnosis, the voltage of the power supply line 8 is acquired based on the voltage at the merging portion P1 side relative to the third switching element SW3 in the third line L3 has been described. However, in the power supply line diagnosis, the voltage of the power supply line 8 may be acquired based on the voltage at the power supply line 8 side relative to the third switching element SW3 in the third line L3. In this case, in the power supply line diagnosis, the diagnosis unit 52c can change the current to be applied to the resistance 35 by switching the second switching element SW2 or the third switching element SW3 between the open state and the closed state, and changing the duration time of the open state per unit time.

Preferably, in the hydraulic pressure control unit 5, the brake system 10 is provided with the hydraulic pressure control unit 5, and in the brake system 10, the number of the wheel cylinders 24 that communicate with the one master cylinder 21 is one. In this case, assuming a case where the power supply line diagnosis is performed in a state where the inlet valve 31 is opened and closed, even a rider performs the brake operation using the operation unit (for example, the second brake operation unit 13) of a braking mechanism (for example, the rear-wheel braking mechanism 14) including the inlet valve 31 in the closed state, it is impossible to generate a braking force by the braking mechanism. Therefore, in a case where the brake operation is performed by the rider during the execution of the power supply line diagnosis, it is especially likely to be difficult to brake the straddle-type vehicle 100 with the intention of the rider. On the other hand, the power supply line diagnosis by the diagnosis unit 52c is performed without opening and closing the inlet valve 31. Therefore, even in a case where a brake operation is performed by a rider during the execution of the power supply line diagnosis, braking the straddle-type vehicle 100 with the intention of the rider is appropriately implemented.

The invention is not limited the description of the embodiment. For example, only a part of the embodiment may be executed.

### Reference Signs List

1: Body
2: Handle
3: Front wheel
3a: Rotor
4: Rear wheel
4a: Rotor
5: Hydraulic pressure control unit
6: Notification device
7: Power supply
8: Power supply line
10: Brake system
11: First brake operation unit
12: Front-wheel braking mechanism
13: Second brake operation unit
14: Rear-wheel braking mechanism
21: Master cylinder
22: Reservoir
23: Brake caliper
24: Wheel cylinder
25: Main flow path
26: Auxiliary flow path
31: Inlet valve
32: Outlet valve
33: Accumulator
34: Pump
35: Resistance
41: Front-wheel wheel speed sensor
42: Rear-wheel wheel speed sensor
43: Voltage sensor
44: Voltage sensor
51: Hydraulic pressure control mechanism
51a: Base
52: Control device
52a: Acquisition unit
52b: Control unit
52c: Diagnosis unit
100: Straddle-type vehicle
521: Integrated circuit
L1: First line
L2: Second line
L3: Third line
P1: Merging portion
SW1: First switching element
SW2: Second switching element
SW3: Third switching element

## Claims

1. A hydraulic pressure control unit (5) that is used in a brake system (10) of a straddle-type vehicle (100), the hydraulic pressure control unit comprising:
a hydraulic pressure control mechanism (51) including an inlet valve (31) as an electromagnetic valve that is electrically connected to a power supply (7) through a power supply line (8), is provided to a flow path (25) that communicates with a master cylinder (21) and a wheel cylinder (24), and becomes an open state in no-energization and becomes a closed state in energization; and
a control device (52) that controls an operation of the hydraulic pressure control mechanism (51), and further comprising
a resistance (35) that is electrically connected to the power supply (7) through the power supply line (8), wherein
the control device (52) includes a diagnosis unit (52c) that performs a power supply line diagnosis in which an abnormality of the power supply line (8) is diagnosed, in a state where no current is applied to the inlet valve (31) but a current is applied to the resistance (35), based on a voltage change in the power supply line (8) when the current to be applied to the resistance (35) is changed.

2. The hydraulic pressure control unit according to claim 1, the hydraulic pressure control unit further comprising:
a first line (L1) to which the inlet valve (31) is provided and a second line (L2) to which the resistance (35) is provided, which are electrically connected to each other in parallel; and
a switching unit (SW1, SW2, SW3) that switches a path of the current in the hydraulic pressure control unit (5), wherein
the diagnosis unit (52c) switches the path by the switching unit (SW1, SW2, SW3) in the power supply line diagnosis such that no current flows in the first line (L1) but the current flows in the second line (L2).

3. The hydraulic pressure control unit according to claim 2, wherein
the control device (52) includes an integrated circuit (521),
a downstream end of the first line (L1) and a downstream end of the second line (L2) are both connected to the integrated circuit (521), and
the switching unit (SW1, SW2, SW3) includes
a first switching element (SW1) that is electrically connected to the downstream end of the first line (L1), and is incorporated in the integrated circuit (521), and
a second switching element (SW2) that is electrically connected to the downstream end of the second line (L2), and is incorporated in the integrated circuit (521).

4. The hydraulic pressure control unit according to claim 2, the hydraulic pressure control unit further comprising a third line (L3) that electrically connects a merging portion (P1) of an upstream side of the first line (L1) and an upstream side of the second line (L2), to the power supply line (8), wherein the switching unit (SW1, SW2, SW3) includes a third switching element (SW3) that is provided to the third line (L3).

5. The hydraulic pressure control unit according to claim 4, wherein the diagnosis unit (52c) performs the power supply line diagnosis when it is determined that a voltage at the power supply line (8) side relative to the third switching element (SW3) in the third line (L3) is stable.

6. The hydraulic pressure control unit according to claim 4, wherein the diagnosis unit (52c)
performs the power supply line diagnosis in a state where the third switching element (SW3) is closed, and
acquires a voltage of the power supply line (8), based on a voltage at the merging portion (P1) side relative to the third switching element (SW3) in the third line (L3), in the power supply line diagnosis.

7. A brake system comprising the hydraulic pressure control unit (5) according to any one of claims 1 to 6, wherein the number of the wheel cylinders (24) that communicate with the one master cylinder (21) is one.

8. A diagnosis method of a hydraulic pressure control unit (5) that is used in a brake system (10) of a straddle-type vehicle (100),
the hydraulic pressure control unit (5) including:
a hydraulic pressure control mechanism (51) including an inlet valve (31) as an electromagnetic valve that is electrically connected to a power supply (7) through a power supply line (8), is provided to a flow path (25) that communicates with a master cylinder (21) and a wheel cylinder (24), and becomes an open state in no-energization and becomes a closed state in energization; and
a control device (52) that controls an operation of the hydraulic pressure control mechanism (51),
and further including a resistance (35) that is electrically connected to the power supply (7) through the power supply line (8),
the diagnosis method comprising performing, by a diagnosis unit (52c) of the control device (52), a power supply line diagnosis in which an abnormality of the power supply line (8) is diagnosed, in a state where no current is applied to the inlet valve (31) but a current is applied to the resistance (35), based on a voltage change in the power supply line (8) when the current to be applied to the resistance (35) is changed.

## Patentansprüche

1. Hydraulische Drucksteuereinheit (5), die in einem Bremssystem (10) eines Grätschsitzfahrzeugs (100) verwendet wird, wobei die hydraulische Drucksteuereinheit umfasst:
einen hydraulischen Drucksteuermechanismus (51), der ein Einlassventil (31) als ein elektromagnetisches Ventil aufweist, das über eine Stromversorgungsleitung (8) elektrisch mit einer Stromversorgung (7) verbunden ist, zu einem Strömungspfad (25) bereitgestellt ist, der mit einem Hauptzylinder (21) und einem Radzylinder (24) kommuniziert, und ohne Erregung in einen offenen Zustand geht und bei Erregung in einen geschlossenen Zustand geht; und
ein Steuergerät (52), das einen Betrieb des hydraulischen Drucksteuermechanismus (51) steuert und ferner umfasst:
einen Widerstand (35), der durch die Stromversorgungsleitung (8) elektrisch mit der Stromversorgung (7) verbunden ist, wobei
das Steuergerät (52) eine Diagnoseeinheit (52c) aufweist, die eine Stromversorgungsleitungsdiagnose, bei der eine Anomalie der Stromversorgungsleitung (8) diagnostiziert wird, in einem Zustand durchführt, in dem kein Strom an das Einlassventil (31) angelegt ist, sondern ein Strom an den Widerstand (35) angelegt ist, basierend auf einer Spannungsänderung in der Stromversorgungsleitung (8), wenn der an den Widerstand (35) anzulegende Strom geändert wird.

2. Hydraulische Drucksteuereinheit nach Anspruch 1, wobei die hydraulische Drucksteuereinheit ferner umfasst:
eine erste Leitung (L1), zu der das Einlassventil (31) bereitgestellt ist, und eine zweite Leitung (L2), zu der der Widerstand (35) bereitgestellt ist, die elektrisch zueinander parallel geschaltet sind; und
eine Schalteinheit (SW1, SW2, SW3), die einen Strompfad in der hydraulischen Drucksteuereinheit (5) schaltet,
wobei
die Diagnoseeinheit (52c) den Pfad durch die Schalteinheit (SW1, SW2, SW3) bei der Stromversorgungsleitungsdiagnose so schaltet, dass in der ersten Leitung (L1) kein Strom fließt, sondern der Strom in der zweiten Leitung (L2) fließt.

3. Hydraulische Drucksteuereinheit nach Anspruch 2, wobei
das Steuergerät (52) eine integrierte Schaltung (521) aufweist,
ein stromabwärtiges Ende der ersten Leitung (L1) und ein stromabwärtiges Ende der zweiten Leitung (L2) beide mit der integrierten Schaltung (521) verbunden sind und die Schalteinheit (SW1, SW2, SW3) aufweist:
ein erstes Schaltelement (SW1), das elektrisch mit dem stromabwärtigen Ende der ersten Leitung (L1) verbunden ist und in die integrierte Schaltung (521) integriert ist, und
ein zweites Schaltelement (SW2), das mit dem stromabwärtigen Ende der zweiten Leitung (L2) elektrisch verbunden ist und in die integrierte Schaltung (521) integriert ist.

4. Hydraulische Drucksteuereinheit nach Anspruch 2, wobei die hydraulische Drucksteuereinheit ferner eine dritte Leitung (L3) umfasst, die einen Zusammenführungsabschnitt (P1) einer stromaufwärtigen Seite der ersten Leitung (L1) und einer stromaufwärtigen Seite der zweiten Leitung (L2) elektrisch mit der Stromversorgungsleitung (8) verbindet, wobei die Schalteinheit (SW1, SW2, SW3) ein drittes Schaltelement (SW3) aufweist, das zur dritten Leitung (L3) bereitgestellt ist.

5. Hydraulische Drucksteuereinheit nach Anspruch 4, wobei die Diagnoseeinheit (52c) die Stromversorgungsleitungsdiagnose durchführt, wenn bestimmt wird, dass eine Spannung auf der Stromversorgungsleitungs (8) -Seite relativ zum dritten Schaltelement (SW3) in der dritten Leitung (L3) stabil ist.

6. Hydraulikdrucksteuereinheit nach Anspruch 4, wobei die Diagnoseeinheit (52c)
die Diagnose der Stromversorgungsleitung in einem Zustand durchführt, in dem das dritte Schaltelement (SW3) geschlossen ist, und
eine Spannung der Stromversorgungsleitung (8) erfasst, basierend auf einer Spannung auf der Zusammenführungsabschnitts (P1) -Seite relativ zum dritten Schaltelement (SW3) in der dritten Leitung (L3) in der Stromversorgungsleitungsdiagnose.

7. Bremssystem, das die hydraulische Drucksteuereinheit (5) nach einem der Ansprüche 1 bis 6 umfasst, wobei die Anzahl der Radzylinder (24), die mit dem einen Hauptzylinder (21) kommunizieren, eins ist.

8. Diagnoseverfahren einer hydraulischen Drucksteuereinheit (5), die in einem Bremssystem (10) eines Grätschsitzfahrzeugs (100) verwendet wird,
wobei die hydraulische Drucksteuereinheit (5) umfasst: einen hydraulischen Drucksteuermechanismus (51), der ein Einlassventil (31) als ein elektromagnetisches Ventil aufweist, das über eine Stromversorgungsleitung (8) elektrisch mit einer Stromversorgung (7) verbunden ist, zu einem Strömungspfad (25) bereitgestellt ist, der mit einem Hauptzylinder (21) und einem Radzylinder (24) kommuniziert, und ohne Erregung in einen offenen Zustand geht und bei Erregung in einen geschlossenen Zustand geht; und
ein Steuergerät (52), das einen Betrieb des hydraulischen Drucksteuermechanismus (51) steuert,
und ferner einen Widerstand (35) aufweist, der durch die Stromversorgungsleitung (8) elektrisch mit der Stromversorgung (7) verbunden ist,
wobei das Diagnoseverfahren das Durchführen, durch eine Diagnoseeinheit (52c) des Steuergeräts (52), einer Stromversorgungsleitungsdiagnose umfasst, bei der eine Anomalie der Stromversorgungsleitung (8) diagnostiziert wird, in einem Zustand, in dem kein Strom an das Einlassventil (31) angelegt ist, sondern ein Strom an den Widerstand (35) angelegt ist, basierend auf einer Spannungsänderung in der Stromversorgungsleitung (8), wenn der an den Widerstand (35) anzulegende Strom geändert wird.

## Revendications

1. Unité de commande de pression hydraulique (5) qui est utilisée dans un système de freinage (10) d'un véhicule à enfourcher (100), l'unité de commande de pression hydraulique comprenant :
un mécanisme de commande de pression hydraulique (51) incluant une soupape d'entrée (31) comme soupape électromagnétique qui est reliée électriquement à une alimentation électrique (7) par l'intermédiaire d'une ligne d'alimentation électrique (8), est fournie sur un trajet d'écoulement (25) qui communique avec un maître-cylindre (21) et un cylindre de roue (24), et devient un état ouvert en l'absence d'excitation et devient un état fermé en excitation ; et
un dispositif de commande (52) qui commande un fonctionnement du mécanisme de commande de pression hydraulique (51), et comprenant en outre une résistance (35) qui est reliée électriquement à l'alimentation électrique (7) par l'intermédiaire de la ligne d'alimentation électrique (8), dans laquelle le dispositif de commande (52) inclut une unité de diagnostic (52c) qui effectue un diagnostic de ligne d'alimentation électrique dans lequel une anomalie de la ligne d'alimentation électrique (8) est diagnostiquée, dans un état où aucun courant n'est appliqué à la soupape d'entrée (31) mais un courant est appliqué à la résistance (35), sur la base d'un changement de tension dans la ligne d'alimentation électrique (8) lorsque le courant à appliquer à la résistance (35) est modifié.

2. Unité de commande de pression hydraulique selon la revendication 1, l'unité de commande de pression hydraulique comprenant en outre :
une première ligne (L1) sur laquelle la soupape d'entrée (31) est fournie et une seconde ligne (L2) sur laquelle la résistance (35) est fournie, qui sont reliées électriquement l'une à l'autre en parallèle ;
et
une unité de commutation (SW1, SW2, SW3) qui commute un trajet du courant dans l'unité de commande de pression hydraulique (5), dans laquelle
l'unité de diagnostic (52c) commute le trajet par l'unité de commutation (SW1, SW2, SW3) dans le diagnostic de ligne d'alimentation électrique de telle sorte qu'aucun courant ne circule dans la première ligne (L1) mais que le courant circule dans la seconde ligne (L2).

3. Unité de commande de pression hydraulique selon la revendication 2, dans laquelle
le dispositif de commande (52) inclut un circuit intégré (521),
une extrémité en aval de la première ligne (L1) et une extrémité en aval de la seconde ligne (L2) sont reliées toutes les deux au circuit intégré (521), et
l'unité de commutation (SW1, SW2, SW3) inclut un premier élément de commutation (SW1) qui est relié électriquement à l'extrémité en aval de la première ligne (L1), et est incorporé dans le circuit intégré (521), et
un second élément de commutation (SW2) qui est relié électriquement à l'extrémité en aval de la seconde ligne (L2), et est incorporé dans le circuit intégré (521).

4. Unité de commande de pression hydraulique selon la revendication 2, l'unité de commande de pression hydraulique comprenant en outre une troisième ligne (L3) qui relie électriquement une partie de fusion (P1) d'un côté en amont de la première ligne (L1) et d'un côté en amont de la seconde ligne (L2) à la ligne d'alimentation électrique (8), dans laquelle l'unité de commutation (SW1, SW2, SW3) inclut un troisième élément de commutation (SW3) qui est fourni sur la troisième ligne (L3).

5. Unité de commande de pression hydraulique selon la revendication 4, dans laquelle l'unité de diagnostic (52c) effectue le diagnostic de ligne d'alimentation électrique lorsqu'il est déterminé qu'une tension au niveau du côté de la ligne d'alimentation électrique (8) par rapport au troisième élément de commutation (SW3) dans la troisième ligne (L3) est stable.

6. Unité de commande de pression hydraulique selon la revendication 4, dans laquelle l'unité de diagnostic (52c)
effectue le diagnostic de ligne d'alimentation électrique dans un état où le troisième élément de commutation (SW3) est fermé, et
acquiert une tension de la ligne d'alimentation électrique (8), sur la base d'une tension au niveau du côté de la partie de fusion (P1) par rapport au troisième élément de commutation (SW3) dans la troisième ligne (L3), dans le diagnostic de ligne d'alimentation électrique.

7. Système de freinage comprenant l'unité de commande de pression hydraulique (5) selon l'une quelconque des revendications 1 à 6, dans lequel le nombre des cylindres de roue (24) qui communiquent avec le maître-cylindre (21) est un.

8. Procédé de diagnostic d'une unité de commande de pression hydraulique (5) qui est utilisée dans un système de freinage (10) d'un véhicule à enfourcher (100),
l'unité de commande de pression hydraulique (5) incluant :
un mécanisme de commande de pression hydraulique (51) incluant une soupape d'entrée (31) comme soupape électromagnétique qui est reliée électriquement à une alimentation électrique (7) par l'intermédiaire d'une ligne d'alimentation électrique (8), est fournie sur un trajet d'écoulement (25) qui communique avec un maître-cylindre (21) et un cylindre de roue (24), et devient un état ouvert en l'absence d'excitation et devient un état fermé en excitation ; et
un dispositif de commande (52) qui commande un fonctionnement du mécanisme de commande de pression hydraulique (51),
et incluant en outre une résistance (35) qui est reliée électriquement à l'alimentation électrique (7) par l'intermédiaire de la ligne d'alimentation électrique (8),
le procédé de diagnostic comprenant la réalisation, par une unité de diagnostic (52c) du dispositif de commande (52), d'un diagnostic de ligne d'alimentation électrique dans lequel une anomalie de la ligne d'alimentation électrique (8) est diagnostiquée, dans un état où aucun courant n'est appliqué à la soupape d'entrée (31) mais un courant est appliqué à la résistance (35), sur la base d'un changement de tension dans la ligne d'alimentation électrique (8) lorsque le courant à appliquer à la résistance (35) est modifié.
